# EUROPÄISCHE PATENTSCHRIFT

(11) **EP 4 021 762 B1**
(45) Veröffentlichungstag und Bekanntmachung des Hinweises auf die Patenterteilung: **15.11.2023**
(21) Anmeldenummer: 20761547.7
(22) Anmeldetag: 21.08.2020
(51) Int. Cl.: B60Q 3/51, B60Q 3/64, B60Q 3/78, B60Q 3/54

(54) **INNENVERKLEIDUNGSTEIL MIT EINEM LICHTLEITER FÜR EIN KRAFTFAHRZEUG**
INTERIOR LINING FOR VEHICLE COMPRISING A LIGHT GUIDE
ENSEMBLE D'HABILLAGE INTERIEUR COMPRENANT UN GUIDE DE LUMIÈRE

(30) Priorität: 26.08.2019 DE 102019212770
(43) Veröffentlichungstag der Anmeldung: 06.07.2022
(73) Patentinhaber: VOLKSWAGEN AKTIENGESELLSCHAFT, 38440 Wolfsburg (DE)
(72) Erfinder: FRANKE, Stefan, 38536 Meinersen (DE); KREFTER-DE BEER, Claudia, 38446 Wolfsburg (DE); TRIPPEL, Friedrich, 38524 Sassenburg (DE)
(86) Internationale Anmeldenummer: PCT/EP2020/073463
(87) Internationale Veröffentlichungsnummer: WO 2021/037704

(56) Entgegenhaltungen:
- EP-A2- 1 223 082
- EP-B1- 1 223 082
- WO-A1-2018/146397
- DE-U1-202018 103 669
- DE-U1-202018 103 669
- FR-A1- 2 931 747
- US-A1- 2009 196 058
- US-A1- 2015 239 394
- US-A1- 2016 347 244

## Beschreibung

Die Erfindung betrifft ein Innenverkleidungsteil für ein Kraftfahrzeug mit den Merkmalen des Oberbegriffs des Patentanspruchs 1.

Ein derartiges Innenverkleidungsteil ist aus der DE 10 2016 215 218 A1 bekannt. Konkret wird in diesem Dokument ein Verfahren zum Herstellen eines Kraftfahrzeug-Innenverkleidungsteils offenbart, welches aus wenigstens aus einem formstabilen Stützkörper, einer aus dem Stützkörper aufliegenden Schaumschicht, eine die Schaumschicht überdeckenden Haut und aus wenigstens einem von der Schaumschicht zumindest bereichsweise umgebenen Lichtleiter besteht. Der Lichtleiter ist bei dem offenbarten Verfahren unmittelbar in die Schaumschicht eingebettet und befindet sich auf einer durch einen Überstand des Innenverkleidungsteils gebildeten Unterseite. Um bei niedrigen Werkzeugkosten die Einbettung des Lichtleiters in die Schaumschicht zu ermöglichen, werden bei der Herstellung an den Lichtleiter mehrere ringartige Montagebauteile angebracht, welche im geschlossenen Zustand eines Herstellungswerkzeugs einen zwischen dem Stützkörper und der Haut bestehenden Abstand überbrücken.

In der DE 10 2018 202 127 A1 ist eine Beleuchtungsvorrichtung zur Erzeugung eines Ambientelichts im Innenraum eines Kraftfahrzeugs beschrieben. Die Beleuchtungsvorrichtung weist mehrere Leuchtdioden auf, denen in Hauptabstrahlrichtung ein flaches, lichtstreuendes Element in einem Abstand nachgeordnet ist, durch das Licht der Leuchtdioden in den Innenraum gelangen kann. Entweder die Lichteintritts- oder die Lichtaustrittsfläche des lichtstreuenden Elementes kann eine Oberfläche mit einer dreidimensional verlaufenden, kristallartigen Struktur aufweisen. Hierdurch soll ein neuartiges Lichterscheinungsbild geschaffen werden.

Die DE 10 2017 213 988 A1 offenbart ein Beleuchtungssystem für ein Kraftfahrzeug, welches eine als ein Faserband ausgebildete Lichtleiteinrichtung aufweist, wobei das Faserband mehrere Lichtleiter und Fäden umfasst. Die Lichtleiter und Fäden sind zu dem Faserband verwebt. Durch ein Leuchtmittel wird Licht an einer Stirnfläche der Lichtleiter in die jeweiligen Lichtleiter eingekoppelt. Die Lichtleiteinrichtung ist an einem Trägerelement mittels einer Befestigungseinrichtung gehalten.

Die EP 1 223 082 A2 beschreibt ein Fahrzeugdachmodul, das sandwichartig aus einer Außenschale und einer daran angeschäumten Innenschale aus formstabilen Schaumstoff aufgebaut ist. Die Innenschale besteht aus einer oberen und einer unteren Schicht. Die obere Schicht liegt auf einem Karosserierahmen auf und ist mit diesem verschraubt. Die untere Schicht ist zur seitlichen Anlage und Befestigung mit dem Karosserierahmen ausgebildet. Zwischen den Schichten ist ein Hohlraum ausgebildet, in dem eine Leuchte angeordnet ist. Im Bereich der Leuchte weist die untere Schicht ein Gitter mit Durchtrittsöffnungen auf, durch die Licht der Leuchte in den Innenraum eines Kraftfahrzeugs hindurchtreten kann.

Aus der DE 20 2018 103 669 U ist eine Verkleidungskomponente bekannt, welche eine Sichtdachöffnung eines Schiebedachs umrahmt. Die Verkleidungskomponente weist einen Kern aus Schaumstoff auf, der innenraumseitig von einer Rückenschicht abgedeckt ist. Die Rückenschicht ist um eine nach oben gerichtete Kante des Kerns gewickelt und bildet einen Kantenumwicklungsabschnitt aus. Auf der dem Schiebedach zugewandten Seite weist die Verkleidungskomponente eine Verkleidungsverstärkungshalterung auf, welche mit einem Träger mit einem im Querschnitt C-förmigen Abschnitt verbunden ist. In dem Abschnitt ist ein länglicher Lichtleiter aufgenommen, dessen Licht in Richtung des Kantenumwicklungsabschnitts austreten und eine indirekte Beleuchtung des Umfangs der Sichtdachöffnung ermöglichen kann.

Schließlich kann der GB 2 566 258 A eine beleuchtete Fahrzeugverkleidung entnommen werden. Die Fahrzeugverkleidung weist eine äußere Deckschicht auf, die mit einer elastisch zusammendrückbaren Schicht unterlegt ist. Über einen seitlich angeordneten Lichtleiter kann Licht in die zusammendrückbare Schicht und in Richtung der Deckschicht geleitet werden. Die Deckschicht ist opak ausgebildet und weist zum Zwecke des Lichtdurchlasses Perforationen auf. Die Deckschicht kann beispielsweise aus Leder ausgebildet sein. Die Fahrzeugverkleidung umfasst einen Lichtleiter, wobei von einer Lichtquelle emittiertes Licht durch den Lichtleiter geleitet, von dort in die Lichtplatte ausgekoppelt und schließlich in Richtung der Deckschicht reflektiert wird.

Es ist eine Aufgabe der vorliegenden Erfindung, ein Innenverkleidungsteil für ein Kraftfahrzeug bereitzustellen, bei dem ein Lichtleiter exakt und zuverlässig in Bezug zum Innenverkleidungsteil positioniert werden kann. Als weitere oder alternative Aufgabe kann es angesehen werden, dass eine leichte Herstellung ermöglicht und gleichzeitig eine sichere Aufnahme des Lichtleiters bei ungehindertem Austritt von Lichtstrahlen gewährleistet werden kann.

Die vorliegende Aufgabe wird durch ein Innenverkleidungsteil für ein Kraftfahrzeug mit den Merkmalen des Patentanspruchs 1 gelöst. Vorteilhafte Ausbildungen beziehungsweise Weiterbildungen der Erfindung können den abhängigen Ansprüchen entnommen werden.

Die Erfindung geht aus von einem Innenverkleidungsteil für ein Kraftfahrzeug mit wenigstens einem länglichen Lichtleiter. Der Lichtleiter erstreckt sich zumindest bereichsweise entlang des Innenverkleidungsteils. Ferner weist das Innenverkleidungsteil wenigstens einen formstabilen, insbesondere starren Träger auf, mit einer den Träger bedeckenden, schaumstoffartigen Schicht und mit einer die schaumstoffartige Schicht überziehenden Haut. Das Innenverkleidungsteil kann beispielsweise als eine Türinnenverkleidung oder auch als eine Instrumententafelverkleidung ausgebildet sein. Dabei wird die schaumstoffartige Schicht auch als *Slush* und die überziehende Haut auch als *Slushhaut* bezeichnet. Durch das vom Lichtleiter abgegebene Licht kann eine angenehme Innenraum- bzw. Ambientebeleuchtung realisiert werden

Als ein Merkmal der Erfindung wird nun vorgeschlagen, dass der wenigstens eine Lichtleiter in einem länglichen Halteteil gehalten ist, welches seinerseits mit dem formstabilen Träger des schaumstoffartigen Überzugs verbunden ist, insbesondere lösbar verbunden ist.

Auf Grund der oben genannten Merkmale kann der Lichtleiter exakt und zuverlässig in einer definierten Position zum Innenverkleidungsteil, insbesondere zur besagten schaumstoffartigen Schicht, gehalten werden. Hierdurch werden die Grundvoraussetzungen dafür geschaffen, dass mit dem Lichtleiter ein homogenes Lichtbild und eine Ambientebeleuchtung höher Güte realisiert werden kann.

Gemäß einer ersten Weiterbildung der Erfindung wird vorgeschlagen, dass die schaumstoffartige Schicht zusammen mit der Haut einen Überstand aufweist, der in Montageposition des Innenverkleidungsteils im Kraftfahrzeug eine Unterseite ausbildet und der Lichtleiter vom Halteteil an der Unterseite des Überstandes gehalten wird. Dies begünstigt die Realisierung einer indirekten Beleuchtung und ermöglicht eine Ambientebeleuchtung, bei der der Lichtleiter von einem Fahrzeuginsassen nicht oder nur schwer eingesehen werden kann. Lediglich das abgegebene Licht wird wahrgenommen.

Dieser Effekt kann noch verstärkt werden, wenn die Unterseite einen nach unten weisenden Vorsprung aufweist und der Lichtleiter vom Halteteil derart gehalten wird, dass der Lichtleiter in einer Draufsicht auf eine Sichtseite der Innenverkleidung gesehen (die Sichtseite ist die Seite, die man im Montagezustand der Innenverkleidung vom Innenraum aus sieht) vom nach unten weisenden Vorsprung zumindest zu einem Teil überragt wird. Der nach unten weisende Vorsprung kann gewölbt oder auch kantenartig ausgebildet sein.

Nach einer anderen Ausbildung des Erfindungsgedankens weist die Innenverkleidung ein weiteres Bauteil auf, welches unterhalb des Lichtleiters angeordnet ist und von der Unterseite des besagten Überstandes derart beabstandet ist, dass eine Fuge ausgebildet wird. Durch eine solche vorteilhafte Ausgestaltung kann ein besonders angenehmes, linienartiges Ambientelicht erzeugt werden.

Die Innenverkleidung kann derart weitergebildet sein, dass das Halteteil mit dem formstabilen Träger verrastet ist, insbesondere lösbar verrastet ist. Auf diese Weise kann die Montage des Halteteils mitsamt Lichtleiter ohne zusätzliche Werkzeuge montiert werden. Hierdurch können Herstellkosten gesenkt werden.

Besonders einfach kann die Montage dann gestaltet werden, wenn die Wirkrichtung der Verrastung derart ausgerichtet ist, dass eine Montage des Halteteils am Träger in Montageposition des Innenverkleidungsteils im Kraftfahrzeug in einer aufwärts gerichteten Montagebewegung erfolgen kann.

Gemäß weiteren Merkmalen des Erfindungsgedankens weist das Halteteil, im Querschnitt gesehen, eine rinnenartige Umbiegung auf. In dieser Umbiegung ist der Lichtleiter aufgenommen, wobei in Montageposition des Innenverkleidungsteils im Kraftfahrzeug eine Öffnung der Umbiegung nach unten zeigt. Der Lichtleiter ist in der Montageposition mit der rinnenartigen Umbiegung in einer nach oben weisenden, rinnenartigen Einbuchtung des schaumstoffartigen Überzugs eingelassen. Durch eine derartige Ausgestaltung kann das Halteteil leicht hergestellt werden, und es kann bei sicherer Aufnahme des Lichtleiters ein ungehinderter Austritt von Lichtstrahlen nach unten gewährleistet werden.

Vorzugsweise ist der Lichtleiter mit dem Halteteil verrastet, insbesondere lösbar verrastet. Auf diese Weise kann die Montage des Lichtleiters am Halteteil auf sehr einfache Art und Weise erfolgen.

Eine andere Weiterbildung der Erfindung schlägt vor, dass das Halteteil, der formstabile Träger und die schaumstoffartige Schicht Öffnungen aufweisen, durch die das weitere Bauteil mit bolzenartigen Vorsprüngen hindurchragt. Auf diese Weise ist eine sehr zuverlässige Positionierung des unterhalb vom Lichtleiter befindlichen, weiteren Bauteils in Bezug auf den Lichtleiter möglich. Dies kann auch zu einer weiteren Verbesserung der Güte des Lichterscheinungsbildes beitragen.

Es trägt zu einer leichten Herstellbarkeit des Halteteils bei, wenn das Halteteil ein flaches Basisteil aufweist, an das die rinnenartige Umbiegung angeformt ist. Dabei sind im Basisteil Öffnungen eingebracht. Die Öffnungen können als Zentrierhilfe für das bereits erwähnte, unterhalb des Lichtleiters befindliche Bauteil des Innenverkleidungsteils dienen.

Nach einer weiteren, vorteilhaften Ausbildung des Erfindungsgedankens sind im Halteteil mehrere starre Lichtleiter aufgenommen. In jeden der Lichtleiter sind über eine mit dem Halteteil verbundene, steckerartige Lichteinheit Lichtstrahlen wenigstens einer Lichtquelle einkoppelbar. Durch das Vorsehen von mehreren starren Lichtleitern kann auch bei einem langen Innenverkleidungsteil, wie beispielsweise einer Instrumententafel- oder einer Türinnenverkleidung zu einem Lichterscheinungsbild in hoher Güte beigetragen werden.

Um das Halteteil in Fahrzeugquerrichtung leicht zentrieren zu können, wird vorgeschlagen, dass das Halteteil wenigstens eine vom Basisteil abstehende Anformung aufweist, mit der es in eine randseitige Ausnehmung des besagten Trägers des schaumstoffartigen Überzugs hineinragt.

Schließlich soll mit der vorliegenden Erfindung auch ein Kraftfahrzeug unter Schutz gestellt werden, welches mit wenigstens einem erfindungsgemäßen Innenverkleidungsteil ausgestattet ist. Wie bereits erwähnt, kann das Innenverkleidungsteil beispielsweise als eine Instrumententafelverkleidung oder als Türinnenverkleidung ausgebildet sein. Ferner ist auch denkbar, dass das Innenverkleidungsteil ein Verkleidungsteil im Koffer- oder Laderaum des Kraftfahrzeugs ist.

Ein bevorzugtes Ausführungsbeispiel der Erfindung ist in den Figuren dargestellt und wird anhand der Figuren in der nachfolgenden Beschreibung näher erläutert. Dadurch werden auch noch weitere Vorteile der Erfindung deutlich. Gleiche Bezugszeichen, auch in unterschiedlichen Figuren, beziehen sich auf gleiche, vergleichbare oder funktional gleiche Bauteile. Dabei werden entsprechende oder vergleichbare Eigenschaften und Vorteile erreicht, auch wenn eine wiederholte Beschreibung oder Bezugnahme darauf nicht erfolgt. Die Figuren sind nicht oder zumindest nicht immer maßstabsgetreu. In manchen Figuren können Proportionen oder Abstände übertrieben dargestellt sein, um Merkmale eines Ausführungsbeispiels deutlicher hervorheben zu können.

Es zeigen, jeweils schematisch
- Fig. 1: eine Draufsicht auf ein erfindungsgemäßes Innenverkleidungsteil,
- Fig. 2: eine Schnittdarstellung gemäß Schnittansicht II aus Fig. 1,
- Fig. 3: eine Einzeldarstellung des Halteteils mit montiertem Lichtleiter, aus einer Ansicht III gemäß Fig. 2,
- Fig. 4: eine Detaildarstellung gemäß Detail IV aus Fig. 3,
- Fig. 5: eine Schnittdarstellung gemäß Schnittverlauf V aus Fig. 4,
- Fig. 6: eine Detaildarstellung gemäß Detail VI aus Fig. 3,
- Fig. 7: eine Darstellung eines Teilbereichs aus Fig. 6 von der Rückseite betrachtet,
- Fig. 8a: eine Schnittdarstellung gemäß Schnittverlauf Vllla aus Fig. 7 und
- Fig. 8b: eine Schnittdarstellung gemäß Schnittverlauf Vlllb aus Fig. 7.

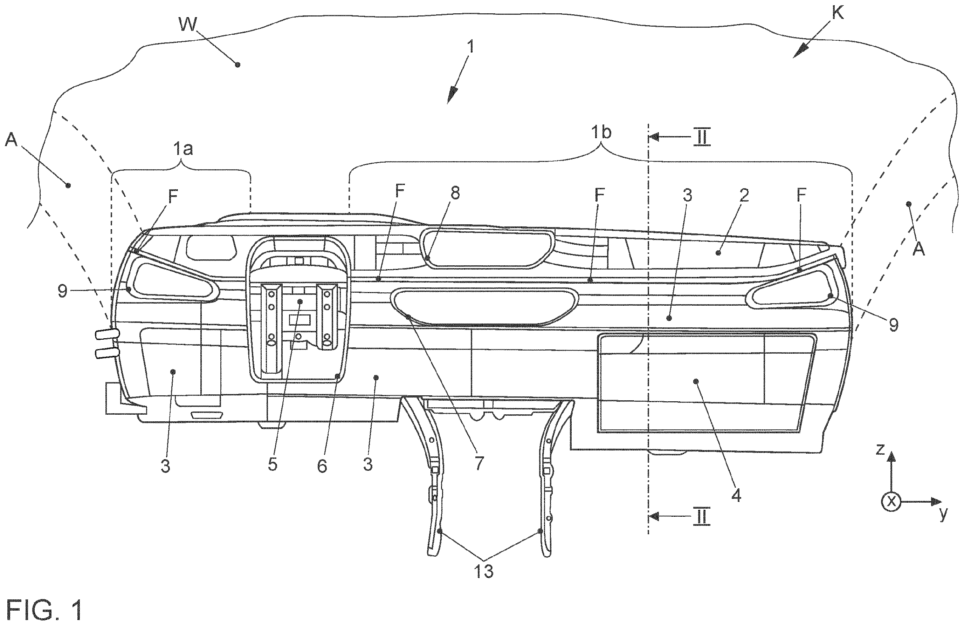

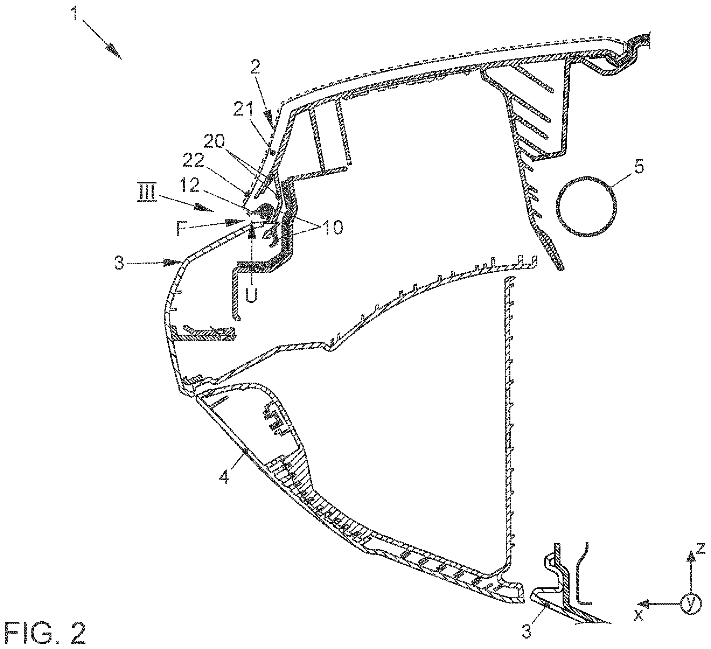

Zunächst wird auf die Fig. 1 und 2 Bezug genommen.

Darin ist ein als Instrumententafelverkleidung ausgebildetes Innenverkleidungsteil 1 ersichtlich. Das Innenverkleidungsteil 1 kann in einem Kraftfahrzeug K montiert werden, von dem lediglich A-Säulen A und eine Windschutzscheibe W angedeutet sind.

Das Innenverkleidungsteil 1 weist rechteckförmige, vertikal ausgerichtete Öffnung 6 auf, die zur Montage eines nicht näher dargestellten Lenkrades dient und das Innenverkleidungsteil 1 in einen linksseitigen Teil 1a und einen rechtsseitigen Teil 1b unterteilt.

Ferner ist ersichtlich, dass das Innenverkleidungsteil 1 ein oberes Bauteil 2 und ein weiteres, unteres Bauteil 3 aufweist. Das obere Bauteil 2 hat einen Überstand mit einer Unterseite U.

Das untere Bauteil 3 grenzt dicht an das obere Bauteil 2 bzw. an die Unterseite U von dessen Überstand an. Dies erfolgt derart, dass zwischen den Bauteilen 2 und 3 eine schmale Fuge F ausgebildet wird, die sich über die Länge des Innenverkleidungsteils 1, im Montagezustand also in etwa über eine Breite des Kraftfahrzeugs K hinzieht.

Mit X sind eine Fahrzeuglängsrichtung, mit Y eine Fahrzeugquerrichtung und mit Z eine Fahrzeughochrichtung beziffert.

Auf der rechten Seite des Innenverkleidungsteils 1 in Fahrzeughochrichtung Z unterhalb des Bauteils 2, ist ein Handschuhfach 4 in das Bauteil 3 eingelassen.

Eine mittlere Öffnung 7 dient zur Aufnahme eines nicht dargestellten, zentralen Ausströmers. Eine Öffnung 8 dient als Montageöffnung für eine nicht näher dargestellte Anzeige- und Bedieneinrichtung. Ferner sind an den Enden des Bauteils 3 Öffnungen mit Ausströmern 9 ausgebildet.

An einem stabilen Querträger 5 kann das gesamte Innenverkleidungsteil 1 gehalten und im Kraftfahrzeug montiert werden. Eine ersichtliche, mittlere Halterung 13 dient zur Montage einer nicht dargestellten Mittelkonsole.

Aus der Darstellung gemäß Fig. 2 ist ersichtlich, dass das obere Bauteil 2 des Innenverkleidungsteils 1 aus einem formstabilen Träger 20 besteht, welcher mit einer schaumstoffartigen, elastisch nachgiebigen Schicht 21, einem sogenannten Slush überzogen ist. Die schaumstoffartige Schicht 21 wiederum ist von einer Haut 22, einer sogenannten Slushhaut, überzogen. Die Haut 22 kann beispielsweise das Aussehen eines Leders aufweisen oder aus einem solchen bestehen.

An der Figur ist sehr gut die zwischen den Bauteilen 2 und 3 ausgebildete Fuge F erkennbar. Oberhalb der Fuge F ist ein Lichtleiter 12 ersichtlich, welcher in einem länglichen Halteteil 10 gehalten ist. Das Halteteil 10 ist seinerseits an dem formstabilen Träger 20 lösbar befestigt, vorzugsweise verrastet.

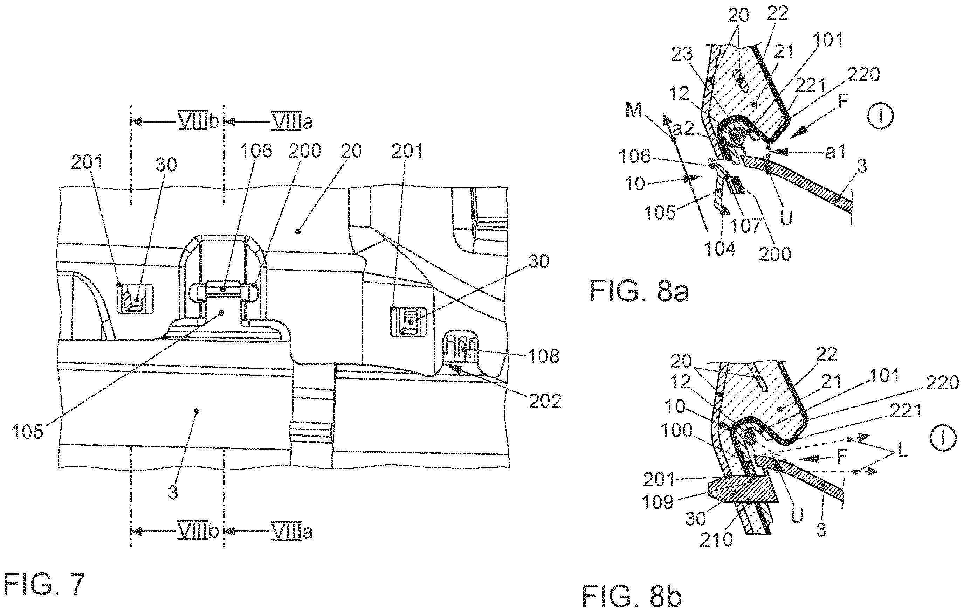

In der Figur wird deutlich, dass der Lichtleiter 12 von der schaumstoffartigen Schicht 21 und somit auch von der Haut 22 teilweise umgeben ist. Dabei befindet sich der Lichtleiter 12 jedoch nicht in direktem Kontakt mit der schaumstoffartigen Schicht 21, ist also nicht in diese eingebettet. Vielmehr wird der Lichtleiter 12 durch das Halteteil 10 in einer rinnenartigen Einbuchtung 23 gehalten, welche durch die schaumstoffartige Schicht 21 und die Haut 22 gebildet ist (vgl. auch Fig. 8 a).

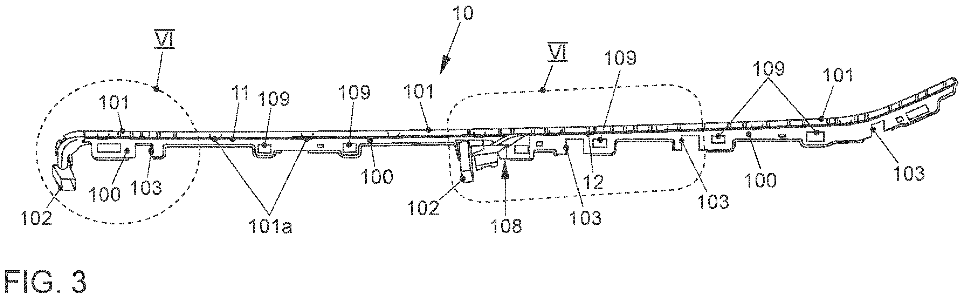

In der Fig. 3 ist nun das Halteteil 10 in Alleinstellung dargestellt. Hieraus wird besonders gut seine längliche Ausbildung ersichtlich. Es erstreckt sich über den erwähnten rechtsseitigen Teil 1b des Innenverkleidungsteils 1.

Das Halteteil 10 weist ein flaches Basisteil 100 auf, welches in eine rinnenartige Umbiegung 101 übergeht. In der Umbiegung 101 ist auch der Lichtleiter 12 aufgenommen, insbesondere in der Umbiegung 101 verklipst.

Ferner ist ersichtlich, dass das Halteteil 10 einen zweiten Lichtleiter 11 aufnimmt, welcher in gleicher Weise in der Umbiegung 101 verklipst ist. Die Verklipsung erfolgt mittels Rastmitteln 101a, welche in Längsrichtung des Halteteils 10 in der Umbiegung 101 beabstandet angeordnet sind.

Durch die genannten Rastmittel 101a können die Lichtleiter 11 und 12 mitsamt steckerartigen Lichteinheiten 102 auf einfache Weise mit dem Halteteil 10 lösbar verbunden werden. Die steckerartigen Lichteinheiten 102 dienen zum einfachen Verbinden mit einer nicht näher dargestellten Stromversorgung, und weisen wenigstens eine Lichtquelle, vorzugsweise eine Leuchtdiode auf (nicht ersichtlich).

Des Weiteren ist anhand eines Vergleichs der Fig. 1 und 3 erkennbar, dass das Halteteil 10 dem Fugenverlauf der Fuge F im rechtsseitigen Teil 1b des Innenverkleidungsteils 1 und somit auch der Länge der Fuge F entspricht.

In der Fuge F des linksseitigen Teils 1a ist entsprechend ein kürzeres Halteteil (nicht dargestellt) angeordnet, welches in vergleichbarer Weise aufgebaut und befestigt ist wie das Halteteil 10.

Anhand der Fig. 3 ist ferner erkennbar, dass das flache Basisteil 100 Öffnungen 103 aufweist. Im Bereich der Öffnungen 103 sind Rastmittel vorhanden, mit deren Hilfe eine Verrastung des Halteteils 10 mit dem formstabilen Träger 20 erfolgt. Dies wird später noch näher erläutert.

Des Weiteren sind im Basisteil 100 Zentrieröffnungen 109 vorhanden. Diese Zentrieröffnungen 109 bilden Zentrierhilfen für das blendenartige Bauteil 3 in Fahrzeughochrichtung Z, wie später noch näher beschrieben wird.

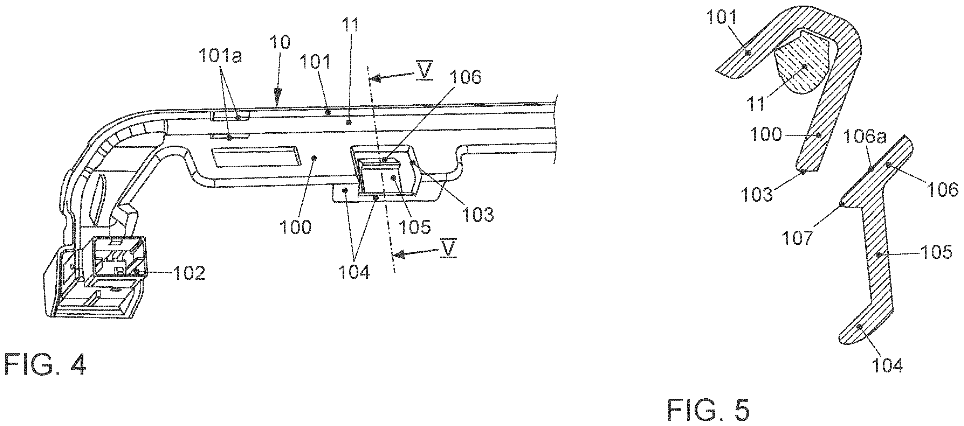

Zunächst sollen jedoch anhand der Fig. 4 und 5 die Rastmittel beschrieben werden, die zur rastenden Befestigung des Halteteils 10 am Träger 20 dienen. So weist das Basisteil 100 im Bereich der Öffnungen 103 eine rechtwinklige Abwinklung 104 auf. Von der Abwinklung 104 erstreckt sich wiederum in Richtung der Umbiegung 101 ein Rastarm 105, an dem ein Rastteil 106 mit einer Rastschräge 106a vorhanden ist. Am unteren Ende des Rastteils 106 ist eine Rastkante 107 vorhanden.

An der Fig. 5 wird besonders gut deutlich, wie die Lichtleiter 11 beziehungsweise 12 in der rinnenartigen Umbiegung 101 aufgenommen sind.

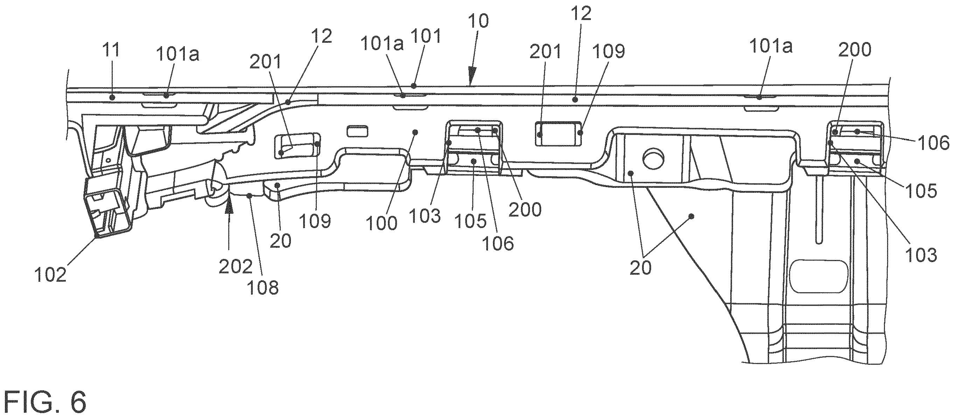

In der Fig. 6 ist das Halteteil 10 in montiertem Zustand am formstabilen Träger 20 ersichtlich. Der Übersichtlichkeit halber sind die schaumstoffartige Schicht 21 und die Haut 22 nicht dargestellt. Die Darstellung entspricht dem in der Fig. 3 gekennzeichneten Detailausschnitt VI. So sind die Rastteile 106 gut erkennbar, welche in Rastöffnungen 200 des formstabilen Trägers 20 einrasten.

Ferner sind die Zentrieröffnungen 109 des Halteteils 10 und Zentrieröffnungen 201 des Trägers 20 ersichtlich, die zur Zentrierung des hier noch nicht montierten Bauteils 3 dienen.

Eine vom Basisteil 100 vorzugsweise rechtwinklig abstehende Anformung 108 ragt in eine randseitige Ausnehmung 202 des Trägers 20 hinein und dient zur Zentrierung des Halteteils 10 in Fahrzeugquerrichtung Y.

In Fig. 7 ist ein Teil des in der Fig. 6 ersichtlichen Ausschnitts von einer Rückseite aus ersichtlich, wobei zusätzlich das montierte Bauteil 3 dargestellt ist.

Anhand dieser Figur ist erkennbar, dass das Bauteil 3 mit bolzenartigen Vorsprüngen 30 in die Zentrieröffnungen 201 des Trägers 20 hineinragt.

Anhand der Schnittdarstellung gemäß Fig. 8a ist besonders gut die rastende Befestigung des Halteteils 10 am formstabilen Träger 20 erkennbar. Es ist ersichtlich, dass das Rastteil 106 in die Rastöffnung 200 einrastet und dabei mit seiner unteren Rastkante 107 auf der Rastöffnung 200 aufliegt.

Durch die Befestigung des Halteteils 10 mit dem formstabilen Träger 20 wird dazu beigetragen, dass der Lichtleiter 12 einen klar definierten, lichten Abstand a2 zum darunter befindlichen Bauteil 3 aufweist.

Anhand der Fig. 8b ist zusätzlich erkennbar, dass das Bauteil 3 mit seinen bolzenartigen Vorsprüngen 3 nicht nur durch die Zentrieröffnungen 201 des Trägers 20 hindurchragt, sondern auch noch durch Zentrieröffnungen 109 des Halteteils 10. In der schaumstoffartigen Schicht 21 (und damit auch in der Haut 22) sind ebenfalls Öffnungen 210 zum leichteren Durchstecken der Vorsprünge 30 eingebracht.

Auf diese Weise kann eine eindeutige Positionierung der im Halteteil 10 gehaltenen Lichtleiter 11 und 12 in Relation zum Bauteil 3 begünstigt werden. Insbesondere kann dadurch der lichte Abstand a2 der Lichtleiter 11, 12 zum Bauteil 3 über die gesamte Länge des Innenverkleidungsteils 1 definiert eingehalten werden.

Das gleiche gilt für einen lichten Abstand a1 zwischen einem nach unten weisenden Vorsprung 221 an der Unterseite U des Überstandes und dem Bauteil 3, durch welches die Fuge F definiert wird. Der Vorsprung 221 geht von einer Vorderkante 220 des Überstandes aus.

Hinter dem Vorsprung 221 ist das Halteteil 10 mit seiner rinnenartigen Umbiegung 101 in einer ebenso rinnenartigen Einbuchtung 23 des schaumstoffartigen Überzugs 21 gehalten und somit die direkte Sicht von einem Innenraum I auf den Lichtleiter 12 verborgen. Der Lichtleiter 12 wird durch den Vorsprung 221 überragt, zumindest teilweise überragt.

So können von den Lichtleitern 11, 12 ausgekoppelte Lichtstrahlen L auf das Bauteil 3 geworfen und von diesem in Richtung des Innenraums I reflektiert werden. Hierdurch wird eine indirekte Ambientebeleuchtung im Bereich der Fuge F des Innenverkleidungsteils 1 realisiert (vergleiche Fig. 8b).

Schließlich soll noch erwähnt werden, dass es sich bei den Lichtleitern 11, 12 vorzugsweise um Lichtleiter aus starrem Kunststoff handelt. Hierdurch kann dazu beigetragen werden, dass die Lichtleiter 11, 12 nach Verrastung im Halteteil 10 über ihre gesamte Länge gleich positioniert sind und somit einen gleichen, lichten Abstand a2 zum Bauteil 3 aufweisen. Dies ist einem homogenen Lichterscheinungsbild zuträglich.

Die Montage des Halteteils 10 mitsamt Lichtleiter 12 kann in einfacher Weise dadurch erfolgen, dass das Halteteil 10 in einer von unten aufwärts gerichteten Montagebewegung M mit dem formstabilen Träger 20 verrastet wird. Dabei kommt zunächst die Rastschräge 106a in Kontakt mit dem Träger 20, so dass der Rastarm 105 ausgelenkt wird und schließlich das Rastteil 106 mit seiner Rastkante 107 in die Rastöffnung 200 des Trägers 20 einrastet. Nach Verrastung des Halteteils 10 kann anschließend das blendenartige Bauteil 3 mit Hilfe der bolzenartigen Vorsprünge 30 zentriert und ebenfalls befestigt werden.

### Bezugszeichenliste

- 1: Innenverkleidungsteil
- 1a: linkseitiger Teil
- 1b: rechtsseitiger Teil
- 2: Bauteil
- 3: Bauteil
- 4: Handschuhfach
- 5: Querträger
- 6: Öffnung
- 7: Öffnung
- 8: Öffnung
- 9: Ausströmer
- 10: Halteteil
- 11: Lichtleiter
- 12: Lichtleiter
- 13: Halterung
- 20: formstabiler Träger
- 21: schaumstoffartige Schicht, insbesondere Slush
- 22: Haut, insbesondere Slushhaut
- 23: rinnenartige Einbuchtung
- 30: bolzenartige Vorsprünge
- 100: flaches Basisteil
- 101: Umbiegung
- 101a: Rastmittel
- 102: steckerartige Lichteinheit
- 103: Öffnungen
- 104: Abwinkelung
- 105: Rastarm
- 106: Rastteil
- 106a: Rastschräge
- 107: Rastkante
- 108: abstehende Anformung
- 109: Zentrieröffnungen
- 200: Rastöffnungen
- 201: Zentrieröffnungen
- 202: randseitige Ausnehmung
- 210: Öffnungen
- 220: Vorderkante
- 221: Vorsprung

- a1, a2: lichte Abstände
- A: A-Säulen
- F: Fuge
- I: Innenraum
- K: Kraftfahrzeug
- L: Lichtstrahlen
- M: Montagebewegung
- U: Unterseite
- W: Windschutzscheibe
- X: Fahrzeuglängsrichtung
- Y: Fahrzeugquerrichtung
- Z: Fahrzeughochrichtung

## Patentansprüche

1. Innenverkleidungsteil (1) für ein Kraftfahrzeug (K), mit wenigstens einem länglichen Lichtleiter (11,12), welcher sich zumindest bereichsweise entlang des Innenverkleidungsteils (1) erstreckt, wobei das Innenverkleidungsteil (1) wenigstens einen formstabilen Träger (20) aufweist, mit einer den formstabilen Träger (20) bedeckenden, schaumstoffartigen Schicht (21) und mit einer die schaumstoffartige Schicht (21) überziehenden Haut (22), **dadurch gekennzeichnet, dass** der wenigstens eine Lichtleiter (11, 12) in einem länglichen Halteteil (10) gehalten ist, welches seinerseits mit dem formstabilen Träger (20) der schaumstoffartigen Schicht (21) verbunden ist, wobei das Halteteil (10), im Querschnitt gesehen, eine rinnenartige Umbiegung (101) aufweist, in der der Lichtleiter (11, 12) aufgenommen ist, wobei in Montageposition des Innenverkleidungsteils (1) im Kraftfahrzeug eine Öffnung der Umbiegung (101) nach unten zeigt und der Lichtleiter (11, 12) mit der rinnenartigen Umbiegung (101) in einer nach oben weisenden, rinnenartigen Einbuchtung (23) des schaumstoffartigen Überzugs (21) eingelassen ist.

2. Innenverkleidungsteil (1) nach dem vorhergehenden Anspruch, **dadurch gekennzeichnet, dass** die schaumstoffartige Schicht (21) zusammen mit der Haut (22) einen Überstand aufweist, der in Montageposition des Innenverkleidungsteils (1) im Kraftfahrzeug eine Unterseite (U) ausbildet und der Lichtleiter (11 12) vom Halteteil (10) an der Unterseite (U) gehalten wird.

3. Innenverkleidungsteil (1) nach Anspruch 2, **dadurch gekennzeichnet, dass** die Unterseite (U) einen nach unten weisenden Vorsprung (221) aufweist und der Lichtleiter (11, 12) vom Halteteil (10) derart gehalten wird, dass der Lichtleiter (11, 12) in einer Draufsicht auf eine Sichtseite der Innenverkleidung gesehen vom nach unten weisenden Vorsprung (221) zumindest zu einem Teil überragt wird.

4. Innenverkleidungsteil (1) nach einem der Ansprüche 2 bis 3, **dadurch gekennzeichnet, dass** die Innenverkleidung (1) ein weiteres Bauteil (3) aufweist, welches in Montageposition des Innenverkleidungsteils (1) im Kraftfahrzeug unterhalb des Lichtleiters (11,12) angeordnet ist und von der Unterseite (U) derart beabstandet ist, dass eine Fuge (F) ausgebildet wird.

5. Innenverkleidungsteil (1) nach einem der vorhergehenden Ansprüche, **dadurch gekennzeichnet, dass** das Halteteil (10) mit dem formstabilen Träger (20) verrastet ist, insbesondere lösbar verrastet ist.

6. Innenverkleidungsteil (1) nach Anspruch 5, **dadurch gekennzeichnet, dass** die Wirkrichtung der Verrastung derart ausgerichtet ist, dass eine Montage des Halteteils (10) am Träger (20) in Montageposition des Innenverkleidungsteils (1) im Kraftfahrzeug in einer aufwärtsgerichteten Montagebewegung (M) erfolgen kann.

7. Innenverkleidungsteil (1) nach einem der vorhergehenden Ansprüche, **dadurch gekennzeichnet, dass** der Lichtleiter (11, 12) mit dem Halteteil (10) verrastet ist, insbesondere lösbar verrastet ist.

8. Innenverkleidungsteil (1) nach einem der Ansprüche 4 bis 7, **dadurch gekennzeichnet, dass** das Halteteil (10), der formstabile Träger (20) und die schaumstoffartige Schicht (21) Öffnungen (109, 210, 201) aufweisen, durch die das weitere Bauteil (3) mit bolzenartigen Vorsprüngen (30) hindurchragt.

9. Innenverkleidungsteil (1) nach einem der vorhergehenden Ansprüche, **dadurch gekennzeichnet, dass** das Halteteil (10) ein flaches Basisteil (100) aufweist, an das die rinnenartige Umbiegung (101) angeformt ist, wobei bevorzugt im Basisteil (100) Öffnungen (103, 109) eingebracht sind.

10. Innenverkleidungsteil (1) nach einem der vorhergehenden Ansprüche, **dadurch gekennzeichnet, dass** im Halteteil (10) mehrere starre Lichtleiter (11, 12) aufgenommen sind, wobei in jeden der Lichtleiter (11, 12) über eine mit dem Halteteil (10) verbundene, steckerartige Lichteinheit (102) Lichtstrahlen wenigstens einer Lichtquelle einkoppelbar sind.

11. Innenverkleidungsteil (1) nach einem der Ansprüche 9 bis 10, **dadurch gekennzeichnet, dass** das Halteteil (10) wenigstens eine vom Basisteil (100) abstehende Anformung (108) aufweist, mit der es in eine randseitige Ausnehmung (202) des Trägers (20) hineinragt.

12. Innenverkleidungsteil (1) nach einem der vorhergehenden Ansprüche, **dadurch gekennzeichnet, dass** das längliche Halteteil (10) lösbar mit dem formstabilen Träger (20) der schaumstoffartigen Schicht (21) verbunden ist.

13. Kraftfahrzeug (K), **gekennzeichnet durch** wenigstens ein Innenverkleidungsteil (1) nach einem der vorhergehenden Ansprüche.

## Claims

1. Interior-lining part (1) for a motor vehicle (K), with at least one elongate light guide (11, 12) which extends at least regionally along the interior-lining part (1), wherein the interior-lining part (1) has at least one dimensionally stable carrier (20) with a foam-like layer (21) which covers the dimensionally stable carrier (20) and with a skin (22) which provides a coating over the foam-like layer (21), **characterized in that** the at least one light guide (11, 12) is held in an elongate holding part (10) which, for its part, is connected to the dimensionally stable carrier (20) of the foam-like layer (21), wherein the holding part (10), as seen in cross section, has a groove-like bend (101) in which the light guide (11, 12) is accommodated, wherein, in the fitting position of the interior-lining part (1) in the motor vehicle, an opening of the bend (101) is directed downwards and the light guide (11, 12), with the groove-like bend (101), is positioned in an upwardly directed groove-like recess (23) of the foam-like coating (21).

2. Interior-lining part (1) according to the preceding claim, **characterized in that** the foam-like layer (21), together with the skin (22), has an overhang which, in the fitting position of the interior-lining part (1) in the motor vehicle, forms a bottom side (U), and the light guide (11, 12) is held by the holding part (10) on the bottom side (U).

3. Interior-lining part (1) according to Claim 2, **characterized in that** the bottom side (U) has a downwardly directed projection (221), and the light guide (11, 12) is held by the holding part (10) in such a way that, as seen in a plan view of a visible side of the interior-lining part, the light guide (11, 12) is projected beyond at least in part by the downwardly directed projection (221).

4. Interior-lining part (1) according to either of Claims 2 and 3, **characterized in that** the interior-lining part (1) has a further component (3) which, in the fitting position of the interior-lining part (1) in the motor vehicle, is arranged below the light guide (11, 12) and is spaced apart from the bottom side (U) in such a way that a gap (F) is formed.

5. Interior-lining part (1) according to one of the preceding claims, **characterized in that** the holding part (10) is latched, in particular is releasably latched, to the dimensionally stable carrier (20).

6. Interior-lining part (1) according to Claim 5, **characterized in that** the direction of action of the latching is oriented in such a way that the holding part (10) can be fitted on the carrier (20) with an upwardly directed fitting movement (M) in the fitting position of the interior-lining part (1) in the motor vehicle.

7. Interior-lining part (1) according to one of the preceding claims, **characterized in that** the light guide (11, 12) is latched, in particular is releasably latched, to the holding part (10).

8. Interior-lining part (1) according to one of Claims 4 to 7, **characterized in that** the holding part (10), the dimensionally stable carrier (20) and the foam-like layer (21) have openings (109, 210, 201) through which the further component (3) projects with bolt-like projections (30).

9. Interior-lining part (1) according to one of the preceding claims, **characterized in that** the holding part (10) has an areal base part (100) onto which the groove-like bend (101) is integrally formed, wherein preferably openings (103, 109) are formed in the base part (100).

10. Interior-lining part (1) according to one of the preceding claims, **characterized in that** multiple rigid light guides (11, 12) are accommodated in the holding part (10), wherein light rays of at least one light source are able to be coupled into each of the light guides (11, 12) via a plug-like light unit (102) which is connected to the holding part (10) .

11. Interior-lining part (1) according to either of Claims 9 and 10, **characterized in that** the holding part (10) has at least one integrally formed portion (108) which protrudes from the base part (100) and with which said holding part projects into an edge-side cutout (202) of the carrier (20).

12. Interior-lining part (1) according to one of the preceding claims, **characterized in that** the elongate holding part (10) is releasably connected to the dimensionally stable carrier (20) of the foam-like layer (21).

13. Motor vehicle (K), **characterized by** at least one interior-lining part (1) according to one of the preceding claims.

## Revendications

1. Ensemble (1) d'habillage intérieur pour un véhicule automobile (K), avec au moins un guide de lumière (11, 12) allongé qui s'étend au moins par zones le long de l'ensemble (1) d'habillage intérieur, l'ensemble (1) d'habillage intérieur présentant au moins un support (20) indéformable, avec une couche (21) de type mousse recouvrant le support (20) indéformable et avec une peau (22) recouvrant la couche (21) de type mousse, **caractérisé en ce que** ledit au moins un guide de lumière (11, 12) est maintenu dans une pièce de maintien (10) allongée, qui est à son tour reliée au support indéformable (20) de la couche de type mousse (21), la pièce de maintien (10) présentant, vue en coupe transversale, un recourbement (101) en forme de gouttière dans lequel est logé le guide de lumière (11, 12) ; dans la position de montage de l'ensemble (1) d'habillage intérieur dans le véhicule automobile, une ouverture de le recourbement (101) est dirigé vers le bas et le guide de lumière (11, 12) est encastré avec le recourbement (101) en forme de gouttière dans un renfoncement (23) en forme de gouttière, dirigé vers le haut, du revêtement (21) en mousse.

2. Ensemble (1) d'habillage intérieur selon la revendication précédente, **caractérisé en ce que** la couche de type mousse (21) présente, avec la peau (22), un débord qui forme une face inférieure (U) en position de montage de l'ensemble (1) d'habillage intérieur dans le véhicule automobile, et le guide de lumière (11, 12) est maintenu par la pièce de maintien (10) sur la face inférieure (U).

3. Ensemble (1) d'habillage intérieur selon la revendication 2, **caractérisé en ce que** la face inférieure (U) présente une saillie (221) dirigée vers le bas et **en ce que** le guide de lumière (11, 12) est maintenu par la pièce de maintien (10) de telle sorte que le guide de lumière (11, 12), vu en plan sur une face visible de l'habillage intérieur, est dépassé au moins en partie par la saillie (221) dirigée vers le bas.

4. Ensemble (1) d'habillage intérieur selon l'une des revendications 2 à 3, **caractérisé en ce que** l'ensemble (1) d'habillage intérieur comporte un autre composant (3) qui, en position de montage de l'ensemble (1) d'habillage intérieur dans le véhicule automobile, est disposé en dessous du guide de lumière (11, 12) et est espacé de la face inférieure (U) de manière à former un joint (F).

5. Ensemble (1) d'habillage intérieur selon l'une des revendications précédentes, **caractérisé en ce que** la pièce de maintien (10) est enclenchée avec le support indéformable (20), en particulier est enclenchée de manière amovible.

6. Ensemble (1) d'habillage intérieur selon la revendication 5, **caractérisé en ce que** la direction d'action de l'encliquetage est orientée de telle sorte qu'un montage de la pièce de maintien (10) sur le support (20) en position de montage de l'ensemble (1) d'habillage intérieur dans le véhicule automobile est apte à être effectué selon un mouvement de montage (M) orienté vers le haut.

7. Ensemble (1) d'habillage intérieur selon l'une des revendications précédentes, **caractérisé en ce que** le guide de lumière (11, 12) est encliqueté, notamment encliqueté de manière amovible, avec la pièce de maintien (10) .

8. Ensemble (1) d'habillage intérieur selon l'une des revendications 4 à 7, **caractérisé en ce que** la pièce de maintien (10), le support indéformable (20) et la couche de type mousse (21) présentent des ouvertures (109, 210, 201) à travers lesquelles passe l'autre pièce (3) avec des saillies (30) de type goujon.

9. Ensemble (1) d'habillage intérieur selon l'une des revendications précédentes, **caractérisé en ce que** la pièce de maintien (10) présente une pièce de base plate (100) sur laquelle est formée le recourbement (101) en forme de gouttière, des ouvertures (103, 109) étant de préférence aménagées dans la pièce de base (100).

10. Ensemble (1) d'habillage intérieur selon l'une des revendications précédentes, **caractérisé en ce que** plusieurs guides de lumière rigides (11, 12) sont logés dans la pièce de maintien (10), des rayons lumineux d'au moins une source lumineuse étant aptes à être accouplés dans chacun des guides de lumière (11, 12) par l'intermédiaire d'une unité lumineuse (102) en forme de fiche reliée à la pièce de maintien (10).

11. Ensemble (1) d'habillage intérieur selon l'une des revendications 9 à 10, **caractérisé en ce que** la pièce de maintien (10) présente au moins une saillie (108) dépassant de la pièce de base (100), par laquelle elle pénètre dans un évidement (202) du côté du bord du support (20) .

12. Ensemble (1) d'habillage intérieur selon l'une des revendications précédentes, **caractérisé en ce que** la pièce de maintien allongée (10) est reliée de manière amovible au support indéformable (20) de la couche de type mousse (21) .

13. Véhicule automobile (K), **caractérisé par** au moins une ensemble (1) d'habillage intérieur selon l'une des revendications précédentes.
